# EUROPEAN PATENT APPLICATION

(11) **EP 3 766 924 A1**
(43) Date of publication of application: **20.01.2021**
(21) Application number: 19187212.6
(22) Date of filing: 19.07.2019
(51) Int. Cl.: C08J 5/18, B29C 48/00, C08K 5/098, C08L 23/12, C08F 110/06, B29C 55/28

(54) **POLYPROPYLENE CAST FILM WITH IMPROVED PERFORMANCE PRODUCED BY A NEW PROCESS**

(71) Applicant: Borealis AG, 1220 Vienna (AT)
(72) Inventor: WANG, Jingbo, 4021 Linz (AT); GAHLEITNER, Markus, 4021 Linz (AT); BERGER, Friedrich, 4021 Linz (AT); VAHTERI, Markku, 06101 Porvoo (FI); LESKINEN, Pauli, 06101 Porvoo (FI); DOSHEV, Petar Emilov, 4021 Linz (AT)
(74) Representative: Borealis AG

(57) **Abstract**

The invention is related to polypropylene cast films combining high impact strength with good haze and additionally showing good stress whitening resistance obtainable by the production of a polypropylene homopolymer (HPP) in the presence of a Ziegler Natta catalyst (ZN-C) and implementing a sequential polymerization process.

## Description

The invention relates to a polypropylene cast film having a small dynamic coefficient of friction (CoF) obtained by a specific process. The invention further relates to said process and the use of a polypropylene composition in a film forming process in order to reduce the CoF of the film.

Polypropylene is widely used in the packaging area, including soft packaging. Cast film made of polypropylene has the disadvantage of very slow slip agent migration compared to e.g. polyethylene. Especially cast films made of visbroken polypropylenes with a thickness of below 50 µm after production do not have a small CoF, which is required for a good winding quality and also for the following conversion steps. For a good winding quality, a small CoF is technically necessary and therefore a market requirement.

In order to fulfill this requirement it is state of the art to add slip agent (in combination with antiblocking agent) to the polypropylene cast film grades. The slip agent migrates to the surface of the film and creates a slippery film which lowers the CoF dramatically. Since the migration to the surface of the slip agent in polypropylene is very slow, an excessive amount of slip agent is added in order to overcome this problem and to obtain the required CoF immediately after film production for good winding quality. If less slip agent is added the CoF immediately after film production is too high and the film has to be stored for a long period (ca. 14 days) in order to achieve a sufficiently small CoF.

The disadvantages of this solution are
- high cost due to excessive amount of slip agent.
- deterioration of optical film properties after a longer period of time because too much slip agent migrates to the film surface.
- deposits of slip agent at the castfilm production line when films having a thickness of about 70 µm are produced.

Another known approach is producing polypropylene with specific catalyst technology to achieve lower CoF in the presence of same amount, or even reduced amount of slip agent.

EP1747239 discloses a process for producing a polypropylene film having small dynamic coefficient of friction, where a specific catalyst composition comprising a catalyst component in the form of particles having a defined size range is used for the polymerization of propylene.

KR 2001045571 discloses a process for preparing a film having good slip properties. This process comprises the steps of a) dispersing magnesium ethoxide as raw material of a magnesium-based carrier in a mixed solvent of organic alcohol, a hydrocarbon solvent and an organic phosphorous compound, b) adding anhydrous phthalic acid and c) dropping a titanium tetrachloride solution into the magnesium compound solution and d) collecting a solid component by filtering and adding titanium tetrachloride to the solid component.

US 9701801 also discloses a process comprising (1) combining a metallocene catalyzed polypropylene with a nucleator and a slip agent to form a composition, wherein the amount of nucleator combined with the metallocene catalyzed polypropylene is adjusted to achieve a coefficient of frictionof less than 0.5; and (2) forming a cast film from the composition, wherein the cast film has a coefficient of friction at least 90% less than an otherwise identical cast film in which the nucleator is not present, wherein the coefficient of friction is measured in accordance with ASTM D1894.

However, besides of the coefficient of friction, also good optical properties, especially low haze of the cast film are usually required in the soft packaging area. Therefore, it is the object of the present invention to provide a cast polypropylene film having a small dynamic coefficient of friction and good optical properties, especially low haze and high clarity, at the same time.

The above problem has surprisingly been solved by providing a polypropylene cast film obtained by a specific polymerization process in the present of a specified Ziegler Natta catalyst.

Accordingly, the present invention is directed to a polypropylene cast film obtainable by a production process comprising the steps of:
I. providing a Ziegler Natta catalyst (ZN-C) comprises a titanium compound (TC), a magnesium compound (MC) and an internal donor (ID), wherein said internal donor (ID) is a non-phtalic acid ester,
II. polymerizing propylene in a sequential polymerization process comprising at least two reactors (R1) and (R2) in the presence of said Ziegler-Natta catalyst (ZN-C) obtained in step I to produce a polypropylene homopolymer (HPP) having a melt flow rate MFR2 (230°C) measured according to ISO1133 in the range of 0.3 to 20.0 g/10min, characterized in that said two reactors (R1) and (R2) are different type of reactors, and at least one of the two reactors (R1) and (R2) is a gas phase reactor (GPR),
III. forming a polypropylene composition comprising said polypropylene homopolymer (HPP) obtained from step II and 0.1-0.4 wt% of one or more slip agents based on the total amount of polypropylene composition into a film.

With the invention it is surprisingly possible to use the same amount of slip agent to achieve the reduced CoF after 7 days after production due to accelerated slip agent migration. Furthermore, better optical properties of the film, like lower haze value and higher clarity, are observed. It has surprisingly been found, that films obtained by the above described process apparently show a very fast slip agent migration and have a very small CoF already 3 days after film production.

In a further aspect, the present invention is directed to the process for producing a polypropylene cast film comprising the steps of
I. providing a Ziegler Natta catalyst (ZN-C) comprises a titanium compound (TC), a magnesium compound (MC) and an internal donor (ID), wherein said internal donor (ID) is a non-phtalic acid ester,
II. polymerizing propylene in a sequential polymerization process comprising at least two reactors (R1) and (R2) in the presence of said Ziegler-Natta catalyst (ZN-C) obtained in step I to produce a polypropylene homopolymer (HPP) having a melt flow rate MFR2 (230°C) measured according to ISO1133 in the range of 2.0 to 20.0 g/10min, characterized in that said two reactors (R1) and (R2) are different type of reactors, and at least one of the two reactors (R1) and (R2) is a gas phase reactor (GPR),
III. forming a polypropylene composition comprising said polypropylene homopolymer (HPP) obtained from step II and 0.1-0.4 wt% of one or more slip agents based on the total amount of polypropylene composition into a film.

The present invention is also directed to the use of a polypropylene composition in a film forming process for achieve a CoF not more than 0.45 determined according to ISO 8295, seven days after casting into a film with a thickness of 30 micrometers, and a haze not more than 2.2 %, determined according to ASTM D 1003/92, when cast into a film with a thickness of 50 micrometers, which polypropylene composition comprises a polypropylene homopolymer (HPP) obtained by a polymerization process described in this invention as well as 0.1-0.4 wt% of one or more slip agents based on the total amount of polypropylene composition.

### Detailed description of the invention

In the following the polypropylene cast film as well as the production process are defined in more detail.

### Polypropylene homopolymer (HPP)

According to the present invention, a polypropylene cast film is obtainable by a process comprising the essential step of polymerization for producing a polypropylene homopolymer (HPP).

The term "polypropylene homopolymer (HPP)" used in the present invention relates to a polypropylene that consists substantially, i.e. of more than 98.0 wt.-% of, preferably of more than 99.0 wt.-%, even more preferably of more than 99.5 wt.-%, still more preferably of at least 99.8 wt.-%, of propylene units. In a preferred embodiment, only propylene units in the polypropylene homopolymer (HPP) are detectable.

The polypropylene homopolymer (HPP) can be unimodal or multimodal, like bimodal. However, it is preferred that polypropylene homopolymer (HPP) is multimodal.

The expression "multimodal" as used herein refers to the modality of the polymer, i.e. the form of its molecular weight distribution curve, which is the graph of the molecular weight fraction as a function of its molecular weight.

The polypropylene homopolymer (HPP) has a melt flow rate MFR2 (230°C, 2.16 kg) measured according to ISO 1133 in the range of 0.3 to 20.0 g/10min, preferably from 0.5 to 18.0 g/10 min, more preferably in the range from 0.6 to 15.0 g/10min.

It is preferred that the polypropylene homopolymer (HPP) has a xylene cold soluble fraction (XCS) in the range of 2.0 to 5.0 wt%, preferably in the range of 2.5 to 4.5 wt%, more preferably in the range of 2.8 to 4.0 wt%, based on the total weight of the polypropylene homopolymer (HPP).

Preferably the polypropylene homopolymer (HPP) has a molecular weight distribution (MWD) in the range of 3.5 to 12.0, more preferably in the range of 4.0 to 10.0, still more preferably in the range of 4.0 to 8.5.

According to a preferred embodiment, the polypropylene homopolymer (HPP) has a melting temperature of at least 145 °C, more preferably in the range of 145 to 170 °C, still more preferably in the range of 150 to 170 °C, like in the range of 155 to 167 °C.

Further it is preferred that the polypropylene homopolymer (HPP) has a crystallization temperature of at least 99 °C, more preferably in the range of 99 to 125 °C, still more preferably in the range of 100 to 120 °C, like in the range of 101 to 118 °C.

### Ziegler Natta catalyst (ZN-C)

It is essential for the present invention that a propylene homopolymer (HPP) is polymerized in the presence of a Ziegler-Natta catalyst (ZN-C) comprises a titanium compound (TC), a magnesium compound (MC) and an internal donor (ID), wherein said internal donor (ID) is a non-phtalic acid ester, most preferably diester of non-phthalic dicarboxylic acids as described in more detail below. Thus, the catalyst used in the present invention is fully free of undesired phthalic compounds.

The Ziegler-Natta catalyst (ZN-C) can be further defined by the way as obtained.

Accordingly the Ziegler-Natta catalyst (ZN-C) is preferably obtained by a process comprising the steps of
a) providing a solution of at least one complex (A) being a complex of a magnesium compound (MC) and an alcohol comprising in addition to the hydroxyl moiety at least one further oxygen bearing moiety (A1) being different to a hydroxyl group, and optionally at least one complex (B) being a complex of said magnesium compound (MC) and an alcohol not comprising any other oxygen bearing moiety (B1),
b) combining said solution with a titanium compound (TC) and producing an emulsion the dispersed phase of which contains more than 50 mol.-% of the magnesium;
c) agitating the emulsion in order to maintain the droplets of said dispersed phase preferably within an average size range of 5 to 200µm;
d) solidifying said droplets of the dispersed phase;
e) recovering the solidified particles of the olefin polymerisation catalyst component,
and wherein an internal donor (ID) is added at any step prior to step c) and said internal donor (ID) is non-phthalic acid ester, preferably said internal donor (ID) is a diester of non-phthalic dicarboxylic acids as described in more detail below.

Detailed description as to how such a Ziegler-Natta catalyst (ZN-C) can be obtained is disclosed in WO 2012/007430.

In a preferred embodiment in step a) the solution of complex of magnesium compound (MC) is a mixture of complexes of magnesium compound (MC) (complexes (A) and (B)).

The complexes of magnesium compound (MC) (complexes (A) and (B)) can be prepared *in situ in* the first step of the catalyst preparation process by reacting said magnesium compound (MC) with the alcohol(s) as described above and in more detail below, or said complexes can be separately prepared complexes, or they can be even commercially available as ready complexes and used as such in the catalyst preparation process of the invention. In case the mixture of complexes of magnesium compound (MC) (complexes (A) and (B)) are prepared *in situ* in the first step of the catalyst preparation process they are preferably prepared by reacting said magnesium compound (MC) with the mixture of alcohols (A1) and (B1).

Preferably, the alcohol (A1) comprising in addition to the hydroxyl moiety at least one further oxygen bearing group different to a hydroxyl group to be employed in accordance with the present invention is an alcohol bearing an ether group.

Illustrative examples of such preferred alcohols (A1) comprising in addition to the hydroxyl moiety at least one further oxygen bearing group to be employed in accordance with the present invention areglycol monoethers, in particular C₂ to C₄ glycol monoethers, such as ethylene or propylene glycol monoethers wherein the ether moieties comprise from 2 to 18 carbon atoms, preferably from 4 to 12 carbon atoms. Preferred monoethers are C₂ to C₄ glycol monoethers and derivatives thereof. Illustrative and preferred examples are 2-(2-ethylhexyloxy)ethanol, 2-butyloxy ethanol, 2-hexyloxy ethanol and 1,3-propylene-glycol-monobutyl ether, 3-butoxy-2-propanol, with 2-(2-ethylhexyloxy)ethanol and 1,3-propylene-glycol-monobutyl ether, 3-butoxy-2-propanol being particularly preferred.

In case a mixture of complexes (A) and (B) (or alcohols (A1) and (B1) respectively) are used, the different complexes or alcohols are usually employed in a mole ratio of A:B, or A1:B1 from 1.0:10 to 1.0:0.5, preferably this mole ratio is from 1.0:8.0 to 1.0:1.0, more preferably 1.0:6.0 to 1.0:2.0, even more preferably 1.0:5.0 to 1.0:3.0. As indicated in the ratios above it is more preferred that the amount of alcohol A1, preferably alcohol with ether moiety, is higher that alcohol B1, i.e. alcohol without any other oxygen bearing moiety different to hydroxyl.

The internal donor (ID) used in the preparation of the Ziegler-Natta catalyst (ZN-C) is preferably selected from (di)esters of non-phthalic carboxylic (di)acids and derivatives and mixtures thereof. The ester moieties, i.e. the moieties derived from an alcohol (i.e. the alkoxy group of the ester), may be identical or different, preferably these ester moieties are identical. Typically the ester moieties are aliphatic or aromatic hydrocarbon groups. Preferred examples thereof are linear or branched aliphatic groups having from 1 to 20 carbon atoms, preferably 2 to 16 carbon atoms, more preferably from 2 to 12 carbon atoms, or aromatic groups having 6 to 12 carbon atoms, optionally containing heteroatoms of Groups 14 to 17 of the Periodic Table of IUPAC, especially N, O, S and/or P. The acid moiety of the di- or monoacid(di)ester, preferably of the diester of diacid, preferably comprises 1 to 30 carbon atoms, more preferably, 2 to 20 carbon atoms, still more preferably 2 to 16 carbon atoms, optionally being substituted by aromatic or saturated or non-saturated cyclic or aliphatic hydrocarbyls having 1 to 20 C, preferably 1 to 10 carbon atoms and optionally containing heteroatoms of Groups 14 to 17 of the Periodic Table of IUPAC, especially N, O, S and/or P. Especially preferred esters are diesters of mono-unsaturated dicarboxylic acids.

In particular preferred esters are esters belonging to a group comprising malonates, maleates, succinates, glutarates, cyclohexene-1,2-dicarboxylates and benzoates, optionally being substituted as defined below, and any derivatives and/or mixtures thereof. Preferred examples are e.g. substituted maleates and citraconates, most preferably citraconates.

The internal donor (ID) or precursor thereof as defined further below is added preferably in step a) to said solution.

Esters used as internal donors (ID) can be prepared as is well known in the art. As example dicarboxylic acid diesters can be formed by simply reacting of a carboxylic diacid anhydride with a C₁-C₂₀ alkanol and/or diol.

The titanium compound (TC) is preferably a titanium halide, like TiCl₄.

The complexes of magnesium compounds can be alkoxy magnesium complexes, preferably selected from the group consisting of magnesium dialkoxides, and complexes of a magnesium dihalide and a magnesium dialkoxide. It may be a reaction product of an alcohol and a magnesium compound selected from the group consisting of dialkyl magnesiums, alkyl magnesium alkoxides and alkyl magnesium halides, preferably dialkyl magnesium. It can further be selected from the group consisting of dialkyloxy magnesiums, diaryloxy magnesiums, alkyloxy magnesium halides, aryloxy magnesium halides, alkyl magnesium alkoxides, aryl magnesium alkoxides and alkyl magnesium aryloxides.

The magnesium dialkoxide may be the reaction product of a dialkyl magnesium of the formula R₂Mg, wherein each one of the two Rs is a similar or different C₁-C₂₀ alkyl, preferably a similar or different C₂-C₁₀ alkyl with alcohols as defined in the present application. Typical magnesium alkyls are ethylbutyl magnesium, dibutyl magnesium, dipropyl magnesium, propylbutyl magnesium, dipentyl magnesium, butylpentyl magnesium, butyloctyl magnesium and dioctyl magnesium. Most preferably, one R of the formula R₂Mg is a butyl group and the other R is an octyl or ethyl group, i.e. the dialkyl magnesium compound is butyl octyl magnesium or butyl ethyl magnesium.

Typical alkyl-alkoxy magnesium compounds RMgOR, when used, are ethyl magnesium butoxide, butyl magnesium pentoxide, octyl magnesium butoxide and octyl magnesium octoxide.

Dialkyl magnesium or alkyl magnesium alkoxide can react, in addition to the alcohol containing in addition to the hydroxyl group at least one further oxygen bearing moiety being different to a hydroxyl moiety, which is defined above in this application, with a monohydric alcohol R'OH, or a mixture thereof with a polyhydric alcohol R'(OH)ₘ

Preferred monohydric alcohols are alcohols of the formula R^{b}(OH), wherein R^{b} is a C₁-C₂₀, preferably a C₄-C₁₂, and most preferably a C₆-C₁₀, straight-chain or branched alkyl residue or a C₆-C₁₂ aryl residue. Preferred monohydric alcohols include methanol, ethanol, n-propanol, isopropanol, n-butanol, iso-butanol, sec-butanol, tert-butanol, n-amyl alcohol, iso-amyl alcohol, sec-amyl alcohol, tert-amyl alcohol, diethyl carbinol, sec-isoamyl alcohol, tert-butyl carbinol, 1-hexanol, 2-ethyl-1-butanol, 4-methyl-2-pentanol, 1-heptanol, 2-heptanol, 4-heptanol, 2,4-dimethyl-3-pentanol, 1-octanol, 2-octanol, 2-ethyl-1-hexanol, 1-nonanol, 5-nonanol, diisobutyl carbinol, 1-decanol and 2,7-dimethyl-2-octanol, 1-undecanol, 1-dodecanol, 1-tridecanol, 1-tetradecanol, 1-pentadecanol, 1-hexadecanol, 1-heptadecanol 1-octadecanol and phenol or benzyl alcohol. The aliphatic monohydric alcohols may optionally be unsaturated, as long as they do not act as catalyst poisons. The most preferred monohydric alcohol is 2-ethyl-1-hexanol. Preferred polyhydric alcohols are alcohols of the formula R^{a}(OH)ₘ, wherein R^{a} is a straight-chain, cyclic or branched C₂ to C₆ hydrocarbon residue, (OH) denotes hydroxyl moieties of the hydrocarbon residue and m is an integer of 2 to 6, preferably 3 to 5. Especially preferred polyhydric alcohols include ethylene glycol, propylene glycol, trimethylene glycol, 1,2-butylene glycol, 1,3-butylene glycol, 1,4-butylene glycol, 2,3-butylene glycol, 1,5pentanediol, 1,6-hexanediol, 1,8-octanediol, pinacol, diethylene glycol, triethylene glycol, 1,2-catechol, 1,3-catechol and 1,4-catechol, and triols such as glycerol and pentaerythritol.

The solvents to be employed for the preparation of the Ziegler-Natta catalyst (ZN-C) may be selected among aromatic and aliphatic solvents or mixtures thereof. Preferably the solvents are aromatic and/or aliphatic hydrocarbons with 5 to 20 carbon atoms, preferably 5 to 16, more preferably 5 to 12 carbon atoms, examples of which include benzene, toluene, cumene, xylol and the like, with toluene being preferred, as well as pentane, hexane, heptane, octane and nonane including straight chain, branched and cyclic compounds, and the like, with hexanes and heptanes being particular preferred.

Mg compound (MC) is typically provided as a 10 to 50 wt-% solution in a solvent as indicated above. Typical commercially available MC solutions are 20 - 40 wt-% solutions in toluene or heptanes.

The reaction for the preparation of the complex of magnesium compound (MC) may be carried out at a temperature of 40° to 70°C.

In step b) the solution of step a) is typically added to the titanium compound (TC), such as titanium tetrachloride. This addition preferably is carried out at a low temperature, such as from - 10 to 40°C, preferably from -5 to 20°C, such as about -5°C to 15 °C.

The temperature for steps b) and c), is typically -10 to 50°C, preferably from -5 to 30°C, while solidification typically requires heating as described in detail further below.

The emulsion, i.e. the two phase liquid-liquid system may be formed in all embodiments of the present invention by simple stirring and optionally adding (further) solvent(s) and additives, such as the turbulence minimizing agent (TMA) and/or the emulsifying agents described further below.

Preparation of the Ziegler-Natta catalyst (ZN-C) used in the present invention is based on a liquid/liquid two-phase system where no separate external carrier materials such as silica or MgCl₂ are needed in order to get solid catalyst particles.

The present Ziegler-Natta catalyst (ZN-C) particles are spherical and they have preferably a mean particle size from 5 to 500 µm, such as from 5 to 300 µm and in embodiments from 5 to 200 µm, or even from 10 to 100 µm. These ranges also apply for the droplets of the dispersed phase of the emulsion as described herein, taking into consideration that the droplet size can change (decrease) during the solidification step.

The process of the preparation of the Ziegler-Natta catalyst (ZN-C) as intermediate stage, yields to an emulsion of a denser, titanium compound (TC)/toluene-insoluble, oil dispersed phase typically having a titanium compound (TC)/magnesium mol ratio of 0.1 to 10 and an oil disperse phase having a titanium compound (TC)/magnesium mol ratio of 10 to 100. The titanium compound (TC) is preferably TiCl₄. This emulsion is then typically agitated, optionally in the presence of an emulsion stabilizer and/or a turbulence minimizing agent, in order to maintain the droplets of said dispersed phase, typically within an average size range of 5 to 200 µm. The catalyst particles are obtained after solidifying said particles of the dispersed phase e.g. by heating.

In effect, therefore, virtually the entirety of the reaction product of the Mg complex with the titanium compound (TC) - which is the precursor of the ultimate catalyst component - becomes the dispersed phase, and proceeds through the further processing steps to the final particulate form. The disperse phase, still containing a useful quantity of titanium compound (TC), can be reprocessed for recovery of that metal.

Furthermore, emulsifying agents/emulsion stabilizers can be used additionally in a manner known in the art for facilitating the formation and/or stability of the emulsion. For the said purposes e.g. surfactants, e.g. a class based on acrylic or methacrylic polymers can be used. Preferably, said emulsion stabilizers are acrylic or methacrylic polymers, in particular those with medium sized ester side chains having more than 10, preferably more than 12 carbon atoms and preferably less than 30, and preferably 12 to 20 carbon atoms in the ester side chain. Particular preferred are unbranched C₁₂ to C₂₀ (meth)acrylates such as poly(hexadecyl)-methacrylate and poly(octadecyl)-methacrylate.

Furthermore, in some embodiments a turbulence minimizing agent (TMA) can be added to the reaction mixture in order to improve the emulsion formation and maintain the emulsion structure. Said TMA agent has to be inert and soluble in the reaction mixture under the reaction conditions, which means that polymers without polar groups are preferred, like polymers having linear or branched aliphatic carbon backbone chains. Said TMA is in particular preferably selected from α-olefin polymers of α-olefin monomers with 6 to 20 carbon atoms, like polyoctene, polynonene, polydecene, polyundecene or polydodecene or mixtures thereof. Most preferable it is polydecene.

TMA can be added to the emulsion in an amount of e.g. 1 to 1.000 ppm, preferably 5 to 100 ppm and more preferable 5 to 50 ppm, based on the total weight of the reaction mixture.

It has been found that the best results are obtained when the titanium compound (TC)/Mg mol ratio of the dispersed phase (denser oil) is 1 to 5, preferably 2 to 4, and that of the disperse phase oil is 55 to 65. Generally the ratio of the mol ratio titanium compound (TC)/Mg in the disperse phase oil to that in the denser oil is at least 10.

Solidification of the dispersed phase droplets by heating is suitably carried out at a temperature of 70 to 150°C, usually at 80 to 110°C, preferably at 90 to 110°C. The heating may be done faster or slower. As especial slow heating is understood here heating with a heating rate of about 5°C/min or less, and especial fast heating e.g. 10°C/min or more. Often slower heating rates are preferable for obtaining good morphology of the catalyst component.

The solidified particulate product may be washed at least once, preferably at least twice, most preferably at least three times with a hydrocarbon, which preferably is selected from aromatic and aliphatic hydrocarbons, preferably with toluene, heptane or pentane. Washings can be done with hot (e.g. 90°C) or cold (room temperature) hydrocarbons or combinations thereof.

Finally, the washed Ziegler-Natta catalyst (ZN-C) is recovered. It can further be dried, as by evaporation or flushing with nitrogen, or it can be slurried to an oily liquid without any drying step.

The finally obtained Ziegler-Natta catalyst (ZN-C) is desirably in the form of particles having generally an average size range of 5 to 200 µm, preferably 10 to 100, even an average size range of 20 to 60 µm is possible.

The Ziegler-Natta catalyst (ZN-C) is preferably used in association with an alkyl aluminum cocatalyst and optionally external donors.

As further component in the instant polymerization process an external donor (ED) is preferably present. Suitable external donors (ED) include certain silanes, ethers, esters, amines, ketones, heterocyclic compounds and blends of these. It is especially preferred to use a silane. It is most preferred to use silanes of the general formula

R^{a}ₚR^{b}_{q}Si(OR^{c})_{(4-p-q)}

wherein R^{a}, R^{b} and R^{c} denote a hydrocarbon radical, in particular an alkyl or cycloalkyl group, and wherein p and q are numbers ranging from 0 to 3 with their sum p + q being equal to or less than 3. R^{a}, R^{b} and R^{c} can be chosen independently from one another and can be the same or different. Specific examples of such silanes are (tert-butyl)₂Si(OCH₃)₂, (cyclohexyl)(methyl)Si(OCH₃)², (phenyl)₂Si(OCH₃)₂ and (cyclopentyl)₂Si(OCH₃)₂, or of general formula

Si(OCH₂CH₃)₃(NR³R⁴)

wherein R³ and R⁴ can be the same or different a represent a hydrocarbon group having 1 to 12 carbon atoms.

R³ and R⁴ are independently selected from the group consisting of linear aliphatic hydrocarbon group having 1 to 12 carbon atoms, branched aliphatic hydrocarbon group having 1 to 12 carbon atoms and cyclic aliphatic hydrocarbon group having 1 to 12 carbon atoms. It is in particular preferred that R³ and R⁴ are independently selected from the group consisting of methyl, ethyl, n-propyl, n-butyl, octyl, decanyl, iso-propyl, iso-butyl, iso-pentyl, tert.-butyl, tert.-amyl, neopentyl, cyclopentyl, cyclohexyl, methylcyclopentyl and cycloheptyl.

More preferably both R¹ and R² are the same, yet more preferably both R³ and R⁴ are an ethyl group.

In addition to the Ziegler-Natta catalyst (ZN-C) and the optional external donor (ED) a co-catalyst can be used. The co-catalyst is preferably a compound of group 13 of the periodic table (IUPAC), e.g. organo aluminum, such as an aluminum compound, like aluminum alkyl, aluminum halide or aluminum alkyl halide compound. Accordingly in one specific embodiment the co-catalyst (Co) is a trialkylaluminium, like triethylaluminium (TEAL), dialkyl aluminium chloride or alkyl aluminium dichloride or mixtures thereof. In one specific embodiment the co-catalyst (Co) is triethylaluminium (TEAL).

Advantageously, the triethyl aluminium (TEAL) has a hydride content, expressed as AlH₃, of less than 1.0 wt% with respect to the triethyl aluminium (TEAL). More preferably, the hydride content is less than 0.5 wt%, and most preferably the hydride content is less than 0.1 wt%. Preferably the ratio between the co-catalyst (Co) and the external donor (ED) [Co/ED] and/or the ratio between the co-catalyst (Co) and the transition metal (TM) [Co/TM] should be carefully chosen.

Accordingly
(a)the mol-ratio of co-catalyst (Co) to external donor (ED) [Co/ED] must be in the range of 5 to 45, preferably is in the range of 5 to 35, more preferably is in the range of 5 to 25, still more preferably is in the range of 8 to 20; and optionally
(b)the mol-ratio of co-catalyst (Co) to titanium compound (TC) [Co/TC] must be in the range of above 40 to 500, preferably is in the range of 50 to 300, still more preferably is in the range of 60 to 150.

### Sequential polymerization process

The polypropylene homopolymer (HPP) according to this invention is produced in a sequential polymerization process in the presence of a Ziegler-Natta catalyst as defined above.

It is essential that the sequential polymerization process comprising at least two reactors (R1) and (R2), and said two reactors (R1) and (R2) are different type of reactors.

The term "sequential polymerization system" indicates that the propylene copolymer (R-PP) is produced in at least two reactors connected in series. Accordingly the present polymerization system comprises at least a first polymerization reactor (R1) and a second polymerization reactor (R2), and optionally a third polymerization reactor (R3). The term "polymerization reactor" shall indicate that the main polymerization takes place. Thus in case the process consists of two polymerization reactors, this definition does not exclude the option that the overall system comprises for instance a pre-polymerization step in a pre-polymerization reactor. The term "consist of" is only a closing formulation in view of the main polymerization reactors.

It is required in the present invention that at least one of the two polymerization reactors (R1) and (R2) is a gas phase reactor (GPR). Preferably the second polymerization reactor (R2) and the optional third polymerization reactor (R3) are gas phase reactors (GPRs), i.e. a first gas phase reactor (GPR1) and a second gas phase reactor (GPR2). A gas phase reactor (GPR) according to this invention is preferably a fluidized bed reactor, a fast fluidized bed reactor or a settled bed reactor or any combination thereof.

Accordingly, the first polymerization reactor (R1) is preferably a slurry reactor (SR) and can be any continuous or simple stirred batch tank reactor or loop reactor operating in bulk or slurry. Bulk means a polymerization in a reaction medium that comprises of at least 60 % (w/w) monomer. According to the present invention the slurry reactor (SR) is preferably a (bulk) loop reactor (LR).

Preferably the propylene homopolymer of the first polymerization reactor (R1), preferably the polymer slurry of the loop reactor (LR), is directly fed into the second polymerization reactor (R2), i.e. into the (first) gas phase reactor (GPR1), without a flash step between the stages. This kind of direct feed is described in EP 887379 A, EP 887380 A, EP 887381 A and EP 991684 A. By "direct feed" is meant a process wherein the content of the first polymerization reactor (R1), i.e. of the loop reactor (LR), is led directly to the next stage gas phase reactor.

Alternatively, the propylene homopolymer of the first polymerization reactor (R1), preferably polymer slurry of the loop reactor (LR), may be also directed into a flash step or through a further concentration step before fed into the second polymerization reactor (R2), i.e. into the gas phase reactor (GPR). Accordingly, this "indirect feed" refers to a process wherein the content of the first polymerization reactor (R1), of the loop reactor (LR), i.e. the polymer slurry, is fed into the second polymerization reactor (R2), into the (first) gas phase reactor (GPR1), via a reaction medium separation unit and the reaction medium as a gas from the separation unit.

More specifically, the second polymerization reactor (R2), and any subsequent reactor, for instance the third polymerization reactor (R3), are preferably gas phase reactors (GPRs). Such gas phase reactors (GPR) can be any mechanically mixed or fluid bed reactors. Preferably the gas phase reactors (GPRs) comprise a mechanically agitated fluid bed reactor with gas velocities of at least 0.2 m/sec. Thus it is appreciated that the gas phase reactor is a fluidized bed type reactor preferably with a mechanical stirrer.

Thus in a preferred embodiment the first polymerization reactor (R1) is a slurry reactor (SR), like loop reactor (LR), whereas the second polymerization reactor (R2) and any optional subsequent reactor, like the third polymerization reactor (R3), are gas phase reactors (GPRs). Accordingly for the instant process at least two, preferably two polymerization reactors (R1) and (R2) or three polymerization reactors (R1), (R2) and (R3), namely a slurry reactor (SR), like loop reactor (LR) and a (first) gas phase reactor (GPR1) and optionally a second gas phase reactor (GPR2), connected in series are used. If needed prior to the slurry reactor (SR) a pre-polymerization reactor is placed.

The Ziegler-Natta catalyst (ZN-C) is fed into the first polymerization reactor (R1) and is transferred with the polymer (slurry) obtained in the first polymerization reactor (R1) into the subsequent reactors. If the process covers also a pre-polymerization step it is preferred that all of the Ziegler-Natta catalyst (ZN-C) is fed in the pre-polymerization reactor. Subsequently the pre-polymerization product containing the Ziegler-Natta catalyst (ZN-C) is transferred into the first polymerization reactor (R1).

A preferred multistage process is a "loop-gas phase"-process, such as developed by Borealis A/S, Denmark (known as BORSTAR® technology) described e.g. in patent literature, such as in EP 0 887 379, WO 92/12182 WO 2004/000899, WO 2004/111095, WO 99/24478, WO 99/24479 or in WO 00/68315.

Especially good results are achieved in case the temperature in the reactors is carefully chosen.

Accordingly it is preferred that the operating temperature in the first polymerization reactor (R1) is in the range of 62 to 85 °C, more preferably in the range of 65 to 82 °C, still more preferably in the range of 67 to 80 °C.

Alternatively or additionally to the previous paragraph it is preferred that the operating temperature in the second polymerization reactor (R2) and optional in the third reactor (R3) is in the range of 75 to 95 °C, more preferably in the range of 78 to 92 °C.

Preferably the operating temperature in the second polymerization reactor (R2) is equal or higher to the operating temperature in the first polymerization reactor (R1). Accordingly it is preferred that the operating temperature
(a) in the first polymerization reactor (R1) is in the range of 62 to 85 °C, more preferably in the range of 65 to 82 °C, still more preferably in the range of 67 to 80 °C,
   and
(b) in the second polymerization reactor (R2) is in the range of 75 to 95 °C, more preferably in the range of 78 to 92 °C, still more preferably in the range of 78 to 88 °C,
with the proviso that the operating temperature in the in the second polymerization reactor (R2) is equal or higher to the operating temperature in the first polymerization reactor (R1).

Still more preferably the operating temperature of the third polymerization reactor (R3) - if present - is higher than the operating temperature in the first polymerization reactor (R1). In one specific embodiment the operating temperature of the third polymerization reactor (R3) - if present - is higher than the operating temperature in the first polymerization reactor (R1) and in the second polymerization reactor (R2). Accordingly it is preferred that the operating temperature
(a) in the first polymerization reactor (R1) is in the range of 62 to 85 °C, more preferably in the range of 65 to 82 °C, still more preferably in the range of 67 to 80 °C,
(b) in the second polymerization reactor (R2) is in the range of 75 to 95 °C, more preferably in the range of 78 to 92 °C, still more preferably in the range of 78 to 88 °C,
   and
(c) in the third polymerization reactor (R3) - if present - is in the range of 75 to 95 °C, more preferably in the range of 78 to 92 °C, still more preferably in the range of 85 to 92 °C, like in the range of 87 to 92 °C,
with the proviso that the operating temperature in the in the second polymerization reactor (R2) is equal or higher to the operating temperature in the first polymerization reactor (R1) and
with the proviso that the third polymerization reactor (R3) is higher than the operating temperature in the first polymerization reactor (R1), preferably is higher than the operating temperature in the first polymerization reactor (R1) and in the second polymerization reactor (R2).

Typically the pressure in the first polymerization reactor (R1), preferably in the loop reactor (LR), is in the range of from 20 to 80 bar, preferably 30 to 70 bar, like 35 to 65 bar, whereas the pressure in the second polymerization reactor (R2), i.e. in the (first) gas phase reactor (GPR1), and optionally in any subsequent reactor, like in the third polymerization reactor (R3), e.g. in the second gas phase reactor (GPR2), is in the range of from 5 to 50 bar, preferably 15 to 40 bar.

Preferably hydrogen is added in each polymerization reactor in order to control the molecular weight, i.e. the melt flow rate MFR2.

Preferably, the average residence time is rather long in the polymerization reactors (R1) and (R2). In general, the average residence time (τ) is defined as the ratio of the reaction volume (VR) to the volumetric outflow rate from the reactor (Qo) (i.e. VR/Qo), i.e τ = VR/Qo [tau = VR/Qo]. In case of a loop reactor the reaction volume (VR) equals to the reactor volume.

Accordingly, the average residence time (τ) in the first polymerization reactor (R1) is preferably at least 20 min, more preferably in the range of 20 to 45 min, still more preferably in the range of 25 to 42 min, like in the range of 28 to 40 min, and/or the average residence time (τ) in the second polymerization reactor (R2) is preferably at least 90 min, more preferably in the range of 90 to 220 min, still more preferably in the range of 100 to 210 min, yet more preferably in the range of 105 to 200 min, like in the range of 105 to 190 min. Preferably the average residence time (τ) in the third polymerization reactor (R3) - if present - is preferably at least 30 min, more preferably in the range of 30 to 90 min, still more preferably in the range of 40 to 80 min, like in the range of 50 to 80 min.

Further it is preferred that the average residence time (τ) in the total sequential polymerization system, more preferably that the average residence time (τ) in the first (R1) second polymerization reactors (R2) and optional third polymerization reactor (R3) together, is at least 140 min, more preferably at least 150 min, still more preferably in the range of 140 to 240 min, more preferably in the range of 150 to 220 min, still more preferably in the range of 155 to 220 min.

As mentioned above the instant process can comprises in addition to the (main) polymerization of the polypropylene homopolymer (HPP) in the at least two polymerization reactors (R1, R3 and optional R3) prior thereto a pre-polymerization in a pre-polymerization reactor (PR) upstream to the first polymerization reactor (R1).

In the pre-polymerization reactor (PR) a polypropylene (Pre-PP) is produced. The pre-polymerization is conducted in the presence of the Ziegler-Natta catalyst (ZN-C). According to this embodiment the Ziegler-Natta catalyst (ZN-C), the co-catalyst (Co), and the external donor (ED) are all introduced to the pre-polymerization step. However, this shall not exclude the option that at a later stage for instance further co-catalyst (Co) and/or external donor (ED) is added in the polymerization process, for instance in the first reactor (R1). In one embodiment the Ziegler-Natta catalyst (ZN-C), the co-catalyst (Co), and the external donor (ED) are only added in the pre-polymerization reactor (PR), if a pre-polymerization is applied.

The pre-polymerization reaction is typically conducted at a temperature of 0 to 60 °C, preferably from 15 to 50 °C, and more preferably from 20 to 45 °C.

The pressure in the pre-polymerization reactor is not critical but must be sufficiently high to maintain the reaction mixture in liquid phase. Thus, the pressure may be from 20 to 100 bar, for example 30 to 70 bar.

In a preferred embodiment, the pre-polymerization is conducted as bulk slurry polymerization in liquid propylene, i.e. the liquid phase mainly comprises propylene, with optionally inert components dissolved therein. Furthermore, according to the present invention, an ethylene feed is employed during pre-polymerization as mentioned above.

It is possible to add other components also to the pre-polymerization stage. Thus, hydrogen may be added into the pre-polymerization stage to control the molecular weight of the polypropylene (Pre-PP) as is known in the art. Further, antistatic additive may be used to prevent the particles from adhering to each other or to the walls of the reactor.

The precise control of the pre-polymerization conditions and reaction parameters is within the skill of the art.

Due to the above defined process conditions in the pre-polymerization, preferably a mixture (MI) of the Ziegler-Natta catalyst (ZN-C) and the polypropylene (Pre-PP) produced in the pre-polymerization reactor (PR) is obtained. Preferably the Ziegler-Natta catalyst (ZN-C) is (finely) dispersed in the polypropylene (Pre-PP). In other words, the Ziegler-Natta catalyst (ZN-C) particles introduced in the pre-polymerization reactor (PR) split into smaller fragments which are evenly distributed within the growing polypropylene (Pre-PP). The sizes of the introduced Ziegler-Natta catalyst (ZN-C) particles as well as of the obtained fragments are not of essential relevance for the instant invention and within the skilled knowledge.

As mentioned above, if a pre-polymerization is used, subsequent to said pre-polymerization, the mixture (MI) of the Ziegler-Natta catalyst (ZN-C) and the polypropylene (Pre-PP) produced in the pre-polymerization reactor (PR) is transferred to the first reactor (R1). Typically the total amount of the polypropylene (Pre-PP) in the final propylene copolymer (R-PP) is rather low and typically not more than 5.0 wt.-%, more preferably not more than 4.0 wt.-%, still more preferably in the range of 0.5 to 4.0 wt.-%, like in the range 1.0 of to 3.0 wt.-%.

In case that pre-polymerization is not used propylene and the other ingredients such as the Ziegler-Natta catalyst (ZN-C) are directly introduced into the first polymerization reactor (R1).

### Polypropylene cast film

According to the present invention, a polypropylene composition comprising the polypropylene homopolymer (HPP) and 0.1-0.4 wt% of one or more slip agents, preferably 0.1 to 0.35 wt%, more preferably 0.1 to 0.3 wt% of one or more slip agents based on the total amount of polypropylene composition is formed into a cast film.

The polypropylene composition as defined in the instant invention may contain up to 5.0 wt.-% additives, like α-nucleating agents and antioxidants, as well as slip agents and antiblocking agents. Preferably the additive content (without α-nucleating agents) is below 3.0 wt.-%, like below 1.0 wt.-%.

Slip agents are commonly known in the art. Slip agents migrate to the surface and act as lubricants polymer to polymer and polymer against metal rollers, giving reduced coefficient of friction (CoF) as a result. Examples are fatty acid amids, like erucamide (CAS No. 112-84- 30 5), oleamide (CAS No. 301-02-0), stearamide (CAS No. 124-26-5) or combinations thereof. A comprehensive listing of suitable slip agents can be found in Chapter 8 "Slip Additives" of the book "Plastic Additives Handbook" edited by H. Zweifel, R.D. Maier and M. Schiller, 6th edition, Hanser Publishers 2009, pages 629-636.

Common antiblocking agents are natural silica such as diatomaceous earth (such as CAS No. 60676-86-0 (SuperfFloss™), CAS No. 60676-86-0 (SuperFloss E™), or CAS No. 60676-86-0 (Celite 499™)), synthetic silica (such as CAS No. 7631-86-9 or CAS No. 112926-00-8), silicates (such as aluminium silicate (Kaolin) CAS No. 1318-74-7, sodium aluminum silicate CAS No. 1344-00-9, calcined kaolin CAS No. 92704-41-1, aluminum silicate CAS No. 1327-36-2, or calcium silicate CAS No. 1344-95-2), synthetic zeolites (such as sodium calcium aluminosilicate hydrate CAS No. 1344-01-0). A comprehensive listing of suitable anti-blocking agents can be found in Chapter 7 "Anti-blocking Additives" of the book "Plastic Additives Handbook" edited by H. Zweifel, R.D. Maier and M. Schiller, 6th edition, Hanser Publishers 2009, pages 613-628.

In a preferred embodiment, the polypropylene composition may further comprises one or more additives in a total amount of from 0.1 up to 5.0 wt%, based on the composition, selected from the group comprising UV stabilizers, antistatic agents, alphanucleating agents and antioxidants.

Such additives are commonly known to an art skilled person.

Examples of antioxidants which are commonly used in the art, are sterically hindered phenols (such as CAS No. 6683-19-8, also sold as Irganox 1010 FF™ by BASF), phosphorous based antioxidants (such as CAS No. 31570-04-4, also sold as Hostanox PAR 24 (FF)™ by Clariant, or Irgafos 168 (FF)TM by BASF), sulphur based antioxidants (such as CAS No. 693- 36-7, sold as Irganox PS-802 FL™ by BASF), nitrogen-based antioxidants (such as 4,4'-bis(1,1'-dimethylbenzyl)diphenylamine), or antioxidant blends.

Acid scavengers are also commonly known in the art. Examples are calcium stearates, sodium stearates, zinc stearates, magnesium and zinc oxides, synthetic hydrotalcite (e.g. SHT, CAS No. 11097-59-9), lactates and lactylates, as well as calcium stearate (CAS No. 1592-23-0) and zinc stearate (CAS No. 557-05-1).

Suitable UV-stabilisers are, for example, Bis-(2,2,6,6-tetramethyl-4-piperidyl)-sebacate (CAS No. 52829-07-9, Tinuvin 770); 2-hydroxy-4-n-octoxy-benzophenone (CAS No. 1843-05-6, Chimassorb 81).

Alpha nucleating agents like sodium benzoate (CAS No. 532-32-1); a mixture of aluminiumhydroxy-bis[2,2'-methylene-bis(4,6-di-t-butylphenyl)phosphate] and lithium myristate (commercially available as Adekastab NA-21 of Adeka Palmarole, France) or 1,3:2,4-bis(3,4-dimethylbenzylidene)sorbitol (CAS No. 135861-56-2, commercially available as Millad 3988 of Milliken, USA) can also be added.

Suitable antistatic agents are, for example, glycerol esters (CAS No. 97593-29-8) or ethoxylated amines (CAS No. 71786-60-2 or 61791-31-9) or ethoxylated amides (CAS No. 204-393-1). Usually these additives are added in quantities of 100-1.000 ppm for each single component. Preferably at least an antioxidant is added.

The polypropylene composition according to the invention may be compounded and pelletized using any of the variety of compounding and blending machines and methods well known and commonly used in the resin compounding art. For blending the individual components of the instant polypropylene composition a conventional compounding or blending apparatus, e.g. a Banbury mixer, a 2-roll rubber mill, Buss-co-kneader or a twin screw extruder may be used. The polypropylene compositions recovered from the extruder/mixer are usually in the form of pellets. These pellets are then further processed and formed into a film according to present invention.

The polypropylene composition which is obtained according to the description above can be converted into cast films with conventional cast film technology.

Preferably, the molten polymer is extruded though a slot extrusion die onto a chill roll to cool the polymer to a solid film. Typically the polypropylene homopolymer (HPP) is firstly compressed and liquefied in an extruder, it being possible for any additives to be already added to the polymer or introduced at this stage via a masterbatch. The melt is then forced through a flat-film die (slot die), and the extruded film is taken off on one or more take-off rolls, during which it cools and solidifies. It has proven particularly favorable to keep the take-off roll or rolls, by means of which the extruded film is cooled and solidified, at a temperature from 10 to 50°C, preferably from 15 to 40°C.

Preferably the cast film has a thickness of 5 to 2,000 µm, preferably of 10 to 1,000 µm, more preferably of 20 to 700 µm, like of 40 to 500 µm.

Preferably, the polypropylene composition comprising the polypropylene homopolymer (HPP) has a coefficient of friction (CoF) of not more than 0.45, preferably not more than 0.40, more preferably not more than 0.35, determined according to ISO 8295, seven days after casting into a film with a thickness of 50 micrometers.

In a preferred embodiment, the polypropylene composition comprising the propylene homopolymer (HPP) has a haze of not more than 2.2 %, preferably not more than 2.1%, more preferably not more than 2.0%, determined according to ASTM D 1003/92, when cast into a film with a thickness of 50 micrometers.

In the following the present invention is further illustrated by means of examples.

### EXAMPLES

### 1. Measuring methods

The following definitions of terms and determination methods apply for the above general description of the invention as well as to the below examples unless otherwise defined.

**MFR₂ (230 °C)** is measured according to ISO 1133 (230 °C, 2.16 kg load).

**The xylene solubles (XCS, wt.-%):** Content of xylene cold solubles (XCS) is determined at 25 °C according ISO 16152; first edition; 2005-07-01

**Number average molecular weight (Mₙ), weight average molecular weight (M_{w}) and polydispersity (Mw/Mn)**
are determined by Gel Permeation Chromatography (GPC) according to the following method:
The weight average molecular weight Mw and the polydispersity (Mw/Mn), wherein Mn is the number average molecular weight and Mw is the weight average molecular weight) is measured by a method based on ISO 16014-1:2003 and ISO 16014-4:2003. A Waters Alliance GPCV 2000 instrument, equipped with refractive index detector and online viscosimeter was used with 3 x TSK-gel columns (GMHXL-HT) from TosoHaas and 1,2,4-trichlorobenzene (TCB, stabilized with 200 mg/L 2,6-Di tert butyl-4-methyl-phenol) as solvent at 145 °C and at a constant flow rate of 1 mL/min. 216.5 µL of sample solution were injected per analysis. The column set was calibrated using relative calibration with 19 narrow MWD polystyrene (PS) standards in the range of 0.5 kg/mol to 11 500 kg/mol and a set of well characterized broad polypropylene standards. All samples were prepared by dissolving 5 - 10 mg of polymer in 10 mL (at 160 °C) of stabilized TCB (same as mobile phase) and keeping for 3 hours with continuous shaking prior sampling in into the GPC instrument.

**DSC analysis, melting temperature (Tₘ) and heat of fusion (H_{f}), crystallization temperature (T_{c}) and heat of crystallization (H_{c}):** measured with a TA Instrument Q2000 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature and heat of crystallization (H_{c}) are determined from the cooling step, while melting temperature and heat of fusion (H_{f}) are determined from the second heating step.

**The glass transition temperature Tg** is determined by dynamic mechanical analysis according to ISO 6721-7. The measurements are done in torsion mode on compression moulded samples (40x10x1 mm³) between -100 °C and +150 °C with a heating rate of 2 °C/min and a frequency of 1 Hz.

### Transparency, haze, clarity, gloss

Transparency, haze and clarity were determined on cast films with a thickness of 50 µm according to ASTM D 1003/00.

Gloss was determined on cast films with a thickness of 50µm for propylene homopolymers according to DIN 67530 at an angle of 20°.

The retortability performance in terms of transparency, haze and clarity was determined according to ASTM D 1003 by measuring those optical parameters after steam sterilization at 121 °C for 30 min on cast films with a thickness of 50 µm for propylene homopolymers.

### Tensile modulus

The tensile modulus was measured on the 50 µm cast film based on ISO527-3. Values of both in machine direction (MD) and transverse direction (TD) were reported.

### Puncture

The puncture test was measured on the 50 µm cast film based on ISO7765-2. The values were measured at 23°C (reported as Dyna/23°C) and 0°C (reported as Dyna/0°C).

### Coefficient of Friction (CoF)

The dynamic Coefficient of Friction (CoF) as a measure of the frictional behaviour of the film was determined according to ISO 8295 on film samples with a thickness of 50 µm. Immediately after film production the film has been stored at room temperature (23 °C for 144 min, 1 day, 3 days, 7 days and 21 days. Measurement of CoF was then performed at 23 °C on the inside of the film roll (inside/inside - friction).

### 2. Examples

The catalyst used in the polymerization process for the polypropylene homopolymer (HPP) of the inventive example (IE1) was produced as follows:
Used chemicals:
20 % solution in toluene of butyl ethyl magnesium (Mg(Bu)(Et), BEM), provided by Chemtura
2-ethylhexanol, provided by Amphochem
3-Butoxy-2-propanol - (DOWANOL™ PnB), provided by Dow
bis(2-ethylhexyl)citraconate, provided by SynphaBase
TiCl4, provided by Millenium Chemicals
Toluene, provided by Aspokem
Viscoplex® 1-254, provided by Evonik
Heptane, provided by Chevron

### Preparation of a Mg complex

First a magnesium alkoxide solution was prepared by adding, with stirring (70 rpm), into 1 1 kg of a 20 wt-% solution in toluene of butyl ethyl magnesium (Mg(Bu)(Et), BEM), a mixture of 4.7 kg of 2-ethylhexanol and 1.2 kg of butoxypropanol in a 20 l stainless steel reactor. During the addition the reactor contents were maintained below 45 °C. After addition was completed, mixing (70 rpm) of the reaction mixture was continued at 60 °C for 30 minutes. After cooling to room temperature 2.3 kg g of the donor bis(2-ethylhexyl)citraconate was added to the Mg-alkoxide solution keeping temperature below 25 °C. Mixing was continued for 15 minutes under stirring (70 rpm).

### Preparation of solid catalyst component

20.3 kg of TiCl4 and 1.1 kg of toluene were added into a 20 l stainless steel reactor. Under 350 rpm mixing and keeping the temperature at 0 °C, 14.5 kg of the Mg complex prepared in example 1 was added during 1.5 hours. 1.7 l of Viscoplex® 1-254 and 7.5 kg of heptane were added and after 1 hour mixing at 0 °C the temperature of the formed emulsion was raised to 90 °C within 1 hour. After 30 minutes mixing was stopped catalyst droplets were solidified and the formed catalyst particles were allowed to settle. After settling (1 hour), the supernatant liquid was siphoned away.

Then the catalyst particles were washed with 45 kg of toluene at 90°C for 20 minutes followed by two heptane washes (30 kg, 15 min). During the first heptane wash the temperature was decreased to 50 °C and during the second wash to room temperature.

The solid catalyst component was used along with triethyl-aluminium (TEAL) as co-catalyst and dicyclo pentyl dimethoxy silane (D-donor) as donor.

The aluminium to donor ratio, the aluminium to titanium ratio and the polymerization conditions of IE1 and CE1 are indicated in table 1. The base powder of IE1 is produced with two step polymerization process with the catalyst described above, and CE1 is a polypropylene homopolymer produced by a loop process in the present of the same catalyst.

**Table 1: Preparation of the Examples**

| | | **IE1** | **CE1** |
|---|---|---|---|
| TEAL/Ti | [mol/mol] | 150 | **150** |
| TEAL/Donor | [mol/mol] | 8 | **8** |

| **Loop (R1)** | | | |
|---|---|---|---|
| Time | [h] | 0,5 | **0,6** |
| Temperature | [°C] | 75 | 80 |
| MFR₂ | [g/10min] | 0,6 | 0,6 |
| XCS | [wt.-%] | 2,7 | 2,6 |
| H₂/C₃ feed ratio | [mol/kmol] | 0,15 | 0,15 |
| Loop split | [wt.-%] | 46 | 100 |

| **1 GPR (R2)** | | | Not in use |
|---|---|---|---|
| Time | [h] | 2,2 | |
| Temperature | [°C] | **80** | |
| MFR₂ | [g/10min] | 0,6 | |
| H₂/C₃ feed ratio | [mol/kmol] | 1,5 | |
| GPR 1 split | [wt.-%] | 54 | |

The powders of inventive examples IE1 and comparative example CE1 were compounded with 0.1 wt% of Irganox B215 (antioxidant masterbatch supplied by Ciba Specialty Chemicals, Switzerland), 0.2 wt% erucic acid amide, and 0.18 wt% synthetic silica on a twinscrew extruder at 200-250°C. The final MFR was reached with peroxide (Triganox 101 supplied by Akzo) in compounding process. The amount of peroxide was adjusted by man skilled in the art. The erucic acid amide is Finawax-E (CAS No. 112-84-5), commercially available from Fine Organics. The synthetic silica is Slobloc 45B (CAS No. 7631-86-9), commercially available from Grace. The compounding was done on a ZSK 32 twin screw extruder, with a throughput of 200 kg /h and melt temperature of 210°C. Table 2 shows the properties of IE1 and CE1 (after the pellets). Cast films were produced on a single screw extruder with a barrel diameter of 30 mm and a slot die of 200 x 0.5 mm in combination with a chill- and take-up roll. Melt temperature was 260 °C in the die. The chill roll and the take-up roll were kept at 15 °C. Film thickness is 50 µm.

The results are shown in Table 2 for the films made of polypropylene homopolymers (IE1 and CE1)

**Table 2: Properties of films made of propylene homopolymers (TM - tensile modulus, MD - machine direction, TD - transverse direction, b.s. - before sterilisation, a.s. - after sterilisation)**

| | | IE1 | CE1 |
|---|---|---|---|
| Pellets | | | |
| MFR | g/10min | 9,3 | 8 |
| XCS | wt% | 2,98 | 2,04 |
| Tc | °C | 120 | 119 |
| Tm | °C | 165 | 166 |
| Hm | J/g | 108 | 104 |
| Mw | kmol | 233 | 229 |
| Mw/Mn | - | 5.8 | 5.5 |
| 2,1 | mol% | n.d. | n.d. |
| Tg below -20 °C | °C | n.d. | n.d. |
| Tg above -20 °C | °C | -0,1 | 0 |

| Film 50µm | | | |
|---|---|---|---|
| TM (MD) | MPa | 776 | 878 |
| TM (TD) | MPa | 782 | 865 |
| Dyna (23°C) | J/mm | 18,4 | 19,6 |
| Dyna (0°C) | J/mm | 0,4 | 0,3 |
| Haze (b.s.) | % | 1,53 | 3,82 |
| clarity (b.s.) | % | 99,2 | 96,6 |

| CoF after | | | |
|---|---|---|---|
| 1 day | | 0,66 | 0,66 |
| 3 days | | 0,46 | 0,53 |
| 7 days | | 0,41 | 0,46 |
| 14 days | | 0,29 | 0,4 |
| 28 days | | 0,23 | 0,35 |

It is clearly shown in the table 2 that cast films obtainable by the process described in the present invention have a lower CoF already 3 days after film production, and even lower value 7 days after the film production, compared to the cast films obtained from other process. At the same time, optical properties, such as haze and clarity of the films show a clear improvement.

## Claims

1. A polypropylene cast film obtainable by a production process comprising the steps of
I. providing a Ziegler Natta catalyst (ZN-C) comprises a titanium compound (TC), a magnesium compound (MC) and an internal donor (ID), wherein said internal donor (ID) is a non-phtalic acid ester,
II. polymerizing propylene in a sequential polymerization process comprising at least two reactors (R1) and (R2) in the presence of said Ziegler-Natta catalyst (ZN-C) obtained in step I to produce a propylene homopolymer (HPP) having a melt flow rate MFR2 (230°C) measured according to ISO1133 in the range of 0.3 to 20.0 g/10min, **characterized in that** said two reactors (R1) and (R2) are different type of reactors, and at least one of the two reactors (R1) and (R2) is a gas phase reactor (GPR),
III. forming a polypropylene composition comprising said polypropylene homopolymer (HPP) obtained from step II and 0.1-0.4 wt% of one or more slip agents based on the total amount of polypropylene composition into a film.

2. A polypropylene cast film according to claim 1, wherein said polypropylene homopolymer (HPP) has a xylene cold soluble fraction (XCS) in the range of 2.0 to 5.0 wt%.

3. A polypropylene cast film according to claim 1 or 2, wherein said polypropylene homopolymer (HPP) has a molecular weight distribution (MWD) in the range of 3.5 to 12.0.

4. A polypropylene cast film according to any one of the preceding claims, wherein said polypropylene homopolymer (HPP) has
(a) a melting temperature in the range of 145 to 170 °C;
and/or
(b) a crystallization temperature in the range of 99 to 125 °C.

5. A polypropylene cast film according to any one of the preceding claims, wherein the polypropylene homopolymer (HPP) is polymerized in the presence of
(a) a Ziegler-Natta catalyst (ZN-C) comprises a titanium compound (TC), a magnesium compound (MC) and an internal donor (ID), wherein said internal donor (ID) is a non-phthalic acid ester,
(b) a co-catalyst (Co), and
(c) an external donor (ED).

6. A polypropylene cast film according to any one of the preceding claims, wherein
(a) the internal donor (ID) is selected from optionally substituted malonates, maleates, succinates, glutarates, cyclohexene-1,2-dicarboxylates, benzoates and derivatives and/or mixtures thereof, preferably the internal donor (ID) is a citraconate;
(b) the molar-ratio of co-catalyst (Co) to external donor (ED) [Co/ED] is 5 to 45.

7. A polypropylene cast film according to any one of the preceding claims, wherein the polypropylene composition comprising the polypropylene homopolymer (HPP) has a coefficient of friction (CoF) of not more than 0.45, determined according to DIN 53375, seven days after casting into a film with a thickness of 50 micrometers.

8. A polypropylene cast film according to any one of the preceding claims, wherein the polypropylene composition comprising the propylene homopolymer (HPP) has a haze of not more than 2.2%, determined according to ASTM D 1003/92, when cast into a film with a thickness of 50 micrometers.

9. A process for producing a polypropylene cast film comprising the steps of
I. providing a Ziegler Natta catalyst (ZN-C) comprises a titanium compound (TC), a magnesium compound (MC) and an internal donor (ID), wherein said internal donor (ID) is a non-phtalic acid ester,
II. polymerizing propylene in a sequential polymerization process comprising at least two reactors (R1) and (R2) in the presence of said Ziegler-Natta catalyst (ZN-C) obtained in step I to produce a propylene homopolymer (HPP) having a melt flow rate MFR2 (230°C) measured according to ISO1133 in the range of 2.0 to 20.0 g/10min, **characterized in that** said two reactors (R1) and (R2) are different type of reactors, and at least one of the two reactors (R1) and (R2) is a gas phase reactor (GPR),
III. forming a polypropylene composition comprising said polypropylene homopolymer (HPP) obtained from step II and 0.1-0.4 wt% of one or more slip agents based on the total amount of polypropylene composition into a film.

10. Use of a polypropylene composition in a film forming process for achieve a CoF not more than 0.45 determined according to DIN 53375, seven days after casting into a film with a thickness of 30 micrometers, and a haze not more than 1.7 %, determined according to ASTM D 1003/92, when cast into a film with a thickness of 50 micrometers, which polypropylene composition comprises a polypropylene homopolymer (HPP) obtained by a process according to claim 9.
